(19) Europäisches Patentamt

European Patent Office

Office européen des brevets

(11) **EP 1 028 362 B1**

(12) **FASCICULE DE BREVET EUROPEEN**

(45) Date de publication et mention
de la délivrance du brevet:
**18.10.2006 Bulletin 2006/42**

(51) Int Cl.:
***G05B 19/18*** *(2006.01)*

(21) Numéro de dépôt: **99810379.0**

(22) Date de dépôt: **04.05.1999**

(54) **Machine-outil d'usinage non-concentrique**

Werkzeugsteuerung zur nicht-konzentrischen Bearbeitung

Machine tool for non-concentric processing

(84) Etats contractants désignés:
**AT BE CH CY DE DK ES FI FR GB GR IE IT LI LU
MC NL PT SE**

(30) Priorité: **11.02.1999 EP 99810114**

(43) Date de publication de la demande:
**16.08.2000 Bulletin 2000/33**

(73) Titulaire: **Tornos SA
2740 Moutier (CH)**

(72) Inventeur: **Paroz, Cedric
2732 Saicourt (CH)**

(74) Mandataire: **BOVARD AG
Optingenstrasse 16
3000 Bern 25 (CH)**

(56) Documents cités:
**EP-A- 0 774 701 US-A- 4 651 599
US-A- 5 309 800 US-A- 5 396 821
US-A- 5 465 474 US-A- 5 467 675
US-A- 5 713 253**

## Description

La présente invention concerne généralement les machines-outils (notamment les tours) qui sont conçues pour travailler sur une pièce maintenue en rotation, et qui comportent des moyens électroniques programmables commandant un système d'axes permettant le déplacement d'un outil dans le plan perpendiculaire à l'axe de rotation de la pièce. La présente invention concerne plus particulièrement un procédé pour usiner des pièces comportant des portées non-coaxiales ou non-concentriques avec une machine-outil telle que décrite ci-dessus. La présente invention concerne, également, les machines-outils qui sont programmées pour mettre en oeuvre le procédé de la présente invention.

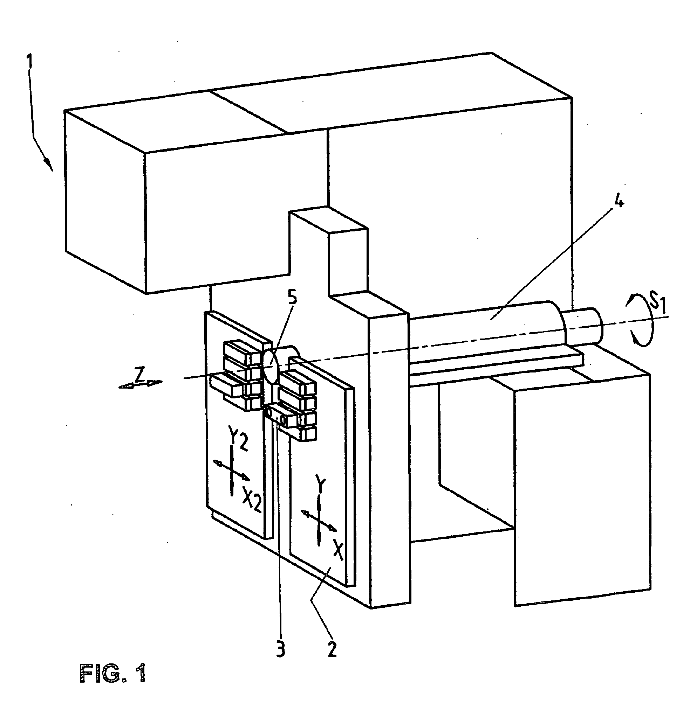

On connaît un grand nombre de machines-outils conçues pour travailler sur une pièce maintenue en rotation. On utilise le plus souvent ces machines-outils pour des opérations de tournage ou d'alésage ou encore pour tronçonner, percer, fraiser, tourbillonner, polygonner, etc. La figure 1 représente un exemple de machine-outil 1 de ce type. Habituellement, ces machines comportent une poupée 4 et un canon 5. Un moteur (non représenté) entraîne la poupée et le cannon en rotation (sur la figure, l'axe de rotation correspond à l'axe « z »). La pièce ou ébauche à usiner est fixée dans l'axe de rotation par des pinces. Dans le cas de tours automatiques, la matière à usiner peut se présenter sous la forme d'une longue barre maintenue dans l'axe « z » du cannon par des moyens de serrage de barre. Dans ce cas, la machine-outil 1 travaille une extrémité de la barre et la poupée 4 comporte des moyens d'alimentation de barre, qui sont prévus pour commander la position de la barre selon l'axe « z ». La machine-outil 1 comporte aussi un « système d'axes y-x » 2 prévu pour recevoir au moins un outil d'usinage 3. Cet outil peut être, par exemple, un couteau ou un outil à tronçonner. Le système d'axes 2 est prévu pour être déplaçable dans un plan « xy » perpendiculaire à l'axe de rotation « z ». Le déplacement dans le plan « xy » permet d'amener l'outil 3 en position de travail en contact avec la pièce à usiner et, éventuellement, de passer d'un outil à l'autre lorsque le système d'axes « y-x » 2 en porte plusieurs. Pendant la coupe, l'outil est maintenu en contact avec la pièce et c'est le mouvement de rotation de celle-ci qui provoque l'enlevage de copeaux. Le système d'axes « y-x » 2 n'est habituellement pas prévu pour tourner sur lui-même. En conséquence, les mouvements du système d'axes 2, et donc de l'outil 3, sont uniquement des mouvements de translation (l'outil reste toujours orienté dans la même direction). La machine-outil 1 doit naturellement aussi permettre un déplacement selon l'axe « z » de l'outil relativement à la pièce à usiner. Ce déplacement peut, éventuellement, être obtenu par déplacement du système d'axes 2 lui-même. Toutefois, le plus souvent, c'est la pièce à usiner qui est déplacée le long de son axe « z » par la poupée à l'aide de ses moyens d'alimentation de barre. Ces déplacements selon trois axes « x,y,z » sont commandés soit manuellement soit automatiquement. Dans ce dernier cas, les mouvements du système d'axes « y-x » 2 peuvent être asservis à des moyens électroniques de commande programmables numériquement. La présente invention concerne ce dernier type de machines-outils, dites à commande numérique, dans lesquelles les déplacements selon les trois axes « x,y, z » sont asservis à des moyens électroniques de commande programmables.

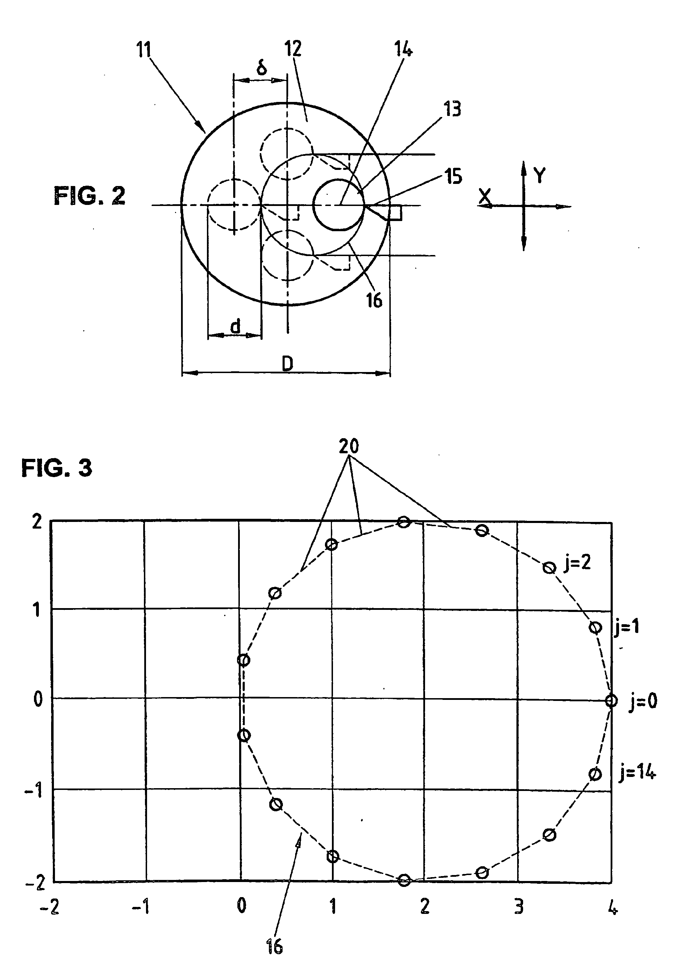

Une machine-outil conçue pour travailler sur une pièce en rotation (tournage, alésage, etc.) ne peut généralement usiner que des pièces ayant des portées cylindriques ou coniques concentriques et coaxiales, c'est-à-dire que les axes principaux des diverses portées sont tous alignés sur un axe longitudinal principal. Lorsqu'on désire usiner une pièce 11 munie d'une ou plusieurs portées (référencées 12 et 13 sur la figure 2) excentrées entre elles, il est normalement nécessaire d'arrêter la machine entre l'usinage des diverses portées, de décaler pièce dans la pince de la broche porte-pièce et de reprendre l'usinage pour la portée excentrée suivante. Ceci nécessite de nombreuses manipulations difficiles à réaliser par des moyens automatiques. Ainsi, de telles manipulations influent négativement sur la précision d'usinage, de même que sur la cadence de travail.

L'existence des difficultés précitées a assurément engendré l'élaboration de techniques particulières pour la réalisation d'usinages spéciaux pendant la rotation de la pièce autour d'un axe de rotation.

Parmi ces techniques particulières, d'un premier document US-A-5,467,675 de l'état de la technique, on connaît un dispositif d'usinage et un procédé de commande de ce dispositif qui sont conçus pour la réalisation, sur une pièce entraînée en rotation, de surfaces incurvées, notamment concaves.

En ce qui concerne le procédé décrit dans ce premier document, outre qu'il n'est pas prévu pour réaliser des surfaces cylindriques ou coniques dont l'axe longitudinal est décalé d'une certaine distance par rapport à l'axe longitudinal de rotation de la pièce, ledit procédé est de surcroît prévu pour faire fonctionner une machine d'usinage spécialement construite et non une machine de décolletage à commande numérique de type connu dont les outils ne se déplacent qu'en translation.

Pour ce qui est du dispositif décrit dans ledit premier document :

- il comprend, certes, classiquement des moyens de déplacement de l'outil qui autorisent des déplacements en translation de cet outil dans des directions perpendiculaires (X, Y) situées dans un plan (xy) perpendiculaire à l'axe de rotation (Z) de la pièce, mais

- il requiert la mise en oeuvre des moyens de contrôle de la position de l'outil d'usinage (laser, interféromètre) qui sont extrêmement onéreux.

Quant aux surfaces obtenues par la mise en oeuvre de la technique de ce premier document, elles doivent subir un usinage de finition.

D'un second document US-A-5,309,800 de l'état de la technique, on connaît un dispositif et un procédé qui sont conçus pour la réalisation, sur une pièce entraînée en rotation, d'une.surface cylindrique sensiblement elliptique, dont l'axe longitudinal est coaxial à celui de la pièce.

Pour ce qui est du dispositif décrit dans ce second document, il comprend des moyens de déplacement de l'outil qui autorisent des déplacements de cet outil dans un plan (xy) perpendiculaire à l'axe de rotation de la pièce, mais ces moyens n'autorisent cependant pas des déplacements en translation dans chacune des directions orthogonales.

En effet, les déplacements dans le plan perpendiculaire à l'axe de rotation de la pièce sont des déplacements selon des arcs de cercles.

En ce qui concerne le procédé de ce second document, il n'est pas non plus prévu pour réaliser des surfaces cylindriques ou coniques dont l'axe longitudinal est décalé d'une certaine distance par rapport à l'axe longitudinal de rotation de la pièce.

Quant aux surfaces obtenues par la mise en oeuvre de la technique de ce second document, elles doivent également subir un usinage de finition.

D'un troisième document US-A-5,396,821, on connaît un dispositif et un procédé qui sont conçus pour, sur une pièce entraînée en rotation selon l'axe longitudinal d'une première portée, permettre l'usinage d'au moins une seconde portée dont l'axe longitudinal est décalé d'une certaine distance par rapport à l'axe longitudinal de la première portée, ladite portée comportant un axe de symétrie de révolution.

Le dispositif de ce troisième document comprend des moyens pour maintenir une pièce en rotation constante autour d'un axe, un outil monté sur un système d'axes permettant des déplacements selon des directions perpendiculaires (X, Y) dans un plan (xy) perpendiculaire à l'axe de rotation, des moyens de commandes programmables pour commander le système d'axes en fonction de la position angulaire de la pièce sur son axe de rotation.

Cependant, avec le dispositif et le procédé d'usinage de ce troisième document, l'usinage est réalisé au moyen d'un outil rotatif et le c'est le support de cet outil rotatif qui est déplacé sur une trajectoire circulaire (autour de l'axe de la portée qu'il réalise) en synchronisme avec la rotation de la pièce.

Le dispositif du document US-A-5,396,821 est une construction spéciale et ne consiste pas en une machine de décolletage à commande numérique de type connu dont les outils ne se déplacent qu'en translation.

Avec ce troisième dispositif, c'est essentiellement la rotation de l'outil qui provoque l'enlèvement de copeaux et le risque de formation de facettes est assurément moindre que dans le cas de l'invention, car dans le cas de la demande en instance, c'est le mouvement da rotation da la pièce qui provoque l'enlevage de copeaux.

Ces techniques particulières d'usinage ont leurs avantages, mais, tel que cela a été exprimé plus avant, l'invention vise à l'utilisation d'une machine traditionnelle de décolletage à commande numérique pour l'usinage d'une portée cylindrique ou conique, décalée par rapport à l'axe de rotation d'une extrémité de barre qui la porte, et ce :

- sans recourir à un montage particulier de la pièce dans la pince de la broche porte pièce, et

- en surmontant la réserve qu'un homme du métier peut avoir à utiliser une machine traditionnelle de décolletage programmable pour la réalisation d'une telle surface, du fait que le déplacement d'un outil par pas s'effectue théoriquement par sauts successifs, selon des segments rectilignes, qui devraient produire une trajectoire polygonale.

La présente invention vise à remédier aux inconvénients de l'art antérieur, notamment, en fournissant un procédé pour usiner une pièce comportant au moins une portée non-concentrique sans qu'il soit nécessaire de décaler la broche porte-pièce d'une valeur déterminée avant de commencer l'usinage de la portée non-concentrique.

Un tel procédé, répondant au but mentionné ainsi qu'à d'autres buts encore, et possédant encore d'autres avantages est conforme à la revendication 1.

La description qui suit concerne une forme particulière de réalisation de la présente invention. L'homme du métier saura adapter le procédé décrit à d'autres machines-outils et à d'autres formes de pièces à usiner. Cette description est à considérer en regard des dessins annexés dans lesquels :

la figure 1 représente un exemple d'une machine-outil, en l'occurrence, une machine de décolletage susceptible d'être utilisée pour mettre en oeuvre le procédé de la présente invention;

la figure 2 représente un exemple d'une pièce réalisable avec le procédé de la présente invention. Elle montre aussi la trajectoire effectuée par l'outil selon le procédé d'usinage de la présente invention;

la figure 3 montre un exemple de trajectoire de l'outil de coupe programmée en mode pas-à-pas;

la figure 4A montre un exemple de trajectoire « d'entrée linéaire » de l'outil de coupe; et la figure 4B un exemple de trajectoire de « sortie linéaire » de l'outil de coupe;

la figure 5 montre les données contenues dans les « tables de pas » pour faire exécuter à l'outil la trajectoire représentée à la figure 3.

La pièce 11 de la figure 2 comprend une première portée cylindrique 12 ayant un certain diamètre (D). Sur cette première portée 12, on a une deuxième portée cylindrique 13 dont le diamètre (d) est inférieur à celui de la première portée et dont l'axe longitudinal est décalé d'une valeur δ par rapport à l'axe longitudinal de la portée 12.

Pour réaliser cette pièce avec le procédé de la présente invention, la barre ou l'ébauche destinée à devenir la pièce est maintenue en rotation. L'axe de rotation « z » de la machine-outil ne correspond pas nécessairement à l'axe géométrique d'une des portées cylindriques à usiner. La pièce à réaliser pourrait d'ailleurs comporter une ou plusieurs portées cylindriques supplémentaires, toutes excentrées les unes par rapport aux autres.

A titre d'exemple de mise en oeuvre du procédé de la présente invention, nous nous limiterons au cas où la portée cylindrique 12 est réalisée coaxialement à l'axe de rotation. Dans ces conditions, le centre 14 de la portée cylindrique excentrée 13 parcourt un cercle de rayon « δ » autour de l'axe de rotation « Oz ». Comme on l'a déjà dit, selon la présente invention, l'outil de coupe 3 (figure 1) ne se déplace qu'en translation. De plus, l'angle d'attaque de l'outil par rapport à la pièce 11 demeure de préférence (mais pas nécessairement) constant. Dans ces conditions, la pointe 15 de l'outil doit parcourir une trajectoire circulaire 16 pour suivre la rotation du centre 14 autour de l'axe « Oz ». Puisque la pointe 15 de l'outil demeure en contact avec la surface de la portée cylindrique 13, la trajectoire 16 du couteau dans le plan « xy » sera décentrée d'une distance d/2 par rapport à l'axe de rotation « Oz ». Si l'attaque se fait de face, le décalage de valeur XO = d/2 se fera selon l'axe « x ».

L'équation générale du mouvement de l'outil pour usiner une portée cylindrique 13 non-concentrique sera donc :

$$(X - XO)^2 + Y^2 = \delta^2$$

De plus, la fréquence de rotation de l'outil sera la même que la fréquence de rotation de la pièce sur elle-même. Dans le cas habituel d'une machine-outil faisant tourner la pièce à vitesse constante, nous pouvons écrire l'équation horaire du mouvement du système d'axes « y-x » et donc de l'outil:

$$X(t) = XO + \delta \cos(\omega t)$$

et

$$Y(t) = \delta \sin(\omega t)$$

où

$$\omega = (2 * \pi * n)/60$$

et

n est la vitesse de rotation en tours/minute.

Le mode de programmation pour commander l'exécution de la trajectoire ci-dessus dépendra naturellement du modèle particulier de machine-outil utilisé. L'homme du métier saura choisir un mode de programmation adapté aux spécifications de la machine-outil à commande numérique dont il dispose. Il est toutefois utile de préciser qu'il est important que la trajectoire de l'outil soit bien synchronisée avec le déplacement angulaire de la pièce tournant sur elle-même. Si l'on veut pouvoir travailler à des vitesses raisonablement élevées, cette dernière contrainte impose l'utilisation d'une commande numérique à la fois rapide et précise.

Les documents EP0 474 603 et EP0 543 034 qui concernent généralement les machines-outils, décrivent tous deux un procédés de commande pour déplacer un outil par rapport à une pièce maintenue en rotation. Ces procédés se caractérisent tous deux par le fait que les déplacements de l'outil par rapport à la pièce selon les trois axes « x,y,z » sont calculés par une unité de programmation externe, avant même l'usinage de la pièce. Cette particularité présente l'avantage de permettre une vitesse d'exécution élevée même avec un matériel dont la puissance de calcul est moyenne.

La suite du présent exemple de mise en oeuvre du procédé de la présente invention sera donnée en faisant référence aux enseignements des deux documents susmentionnés. Toutefois, il est claire que la présente invention ne se limite pas à ce mode particulier de programmation des déplacements de l'outil et que l'homme du métier pourra choisir un autre mode de programmation sans sortir du cadre de la revendication 1.

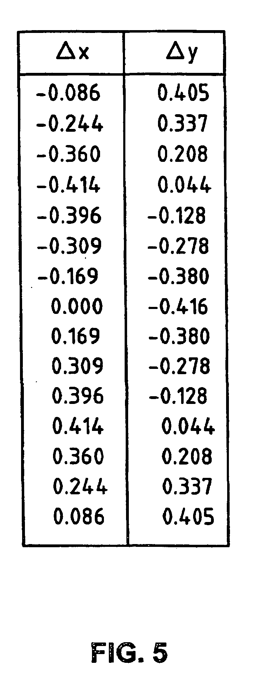

Les déplacements de l'outils par rapport à la pièce à usiner sont préalablement programmés sous la forme de « tables des pas » (figure 5). Pour ce faire, le temps de déplacement est tout d'abord découpé en petits intervalles de temps successifs de durée fixe. Comme le déplacement de l'outil doit être synchronisé à la rotation de la pièce à usiner, il faut choisir la durée des intervalles de temps de façon à permettre l'accomplissement d'un tour de broche complet en un nombre entier de ces intervalles de temps. D'autre part, il faut également que le nombre d'intervalles subdivisant un tour soit suffisant pour définir un nombre adéquat de points sur la trajectoire de l'outil.

Pour donner une idée des ordres de grandeur, nous donnons à titre d'exemple les valeurs suivantes :

- durée d'un pas TE = 0,008 secondes;

- n = 500 tours/minute;

- nombre de pas par tour N = 15.

De manière générale, pour un déplacement par pas de durée constante, l'équation horaire, pour j = 1,.., N, peut s'écrire :

$$X(j) = XO + \delta \cos(2\pi j/N)$$

et

$$Y(j) = \delta \sin(2\pi j/N)$$

avec j = partie entière de t/TE

A partir de l'équation horaire ci-dessus, il est facile de calculer une « tables des pas » pour chacune des directions de déplacement « x » et « y ». Si l'on désigne par $\Delta x$ la longueur d'un pas dans la direction « x » et par $\Delta y$ la longueur d'un pas dans la direction « y », on a :

$$\Delta x = X(j+1) - X(j)$$

et

$$\Delta y = Y(j+1) - Y(j)$$

La figure 5 annexée est un tableau dont les deux colonnes $\Delta x$ et $\Delta y$ constituent respectivement des « tables des pas » pour les déplacements de l'outil selon les directions « x » et « y ». Ces deux tables comportent chacune 15 pas définissant conjointement la vitesse et la direction de l'outil le long de sa trajectoire circulaire. Comme il s'agit d'un exemple, la figure 5 donne les longueurs des pas dans des unités tout à fait arbitraires. De même, la précision (le nombre de chiffres significatifs) est arbitraire également. Signalons qu'en pratique, certaines machines-outils à commande numérique permettent de positionner l'outil avec une précision qui peut atteindre le dixième de micron.

L'exemple de la figure 5 correspond à un déplacement de l'outil sur 15 pas. Toutefois, dans un cas pratique les « tables des pas » comprennent normalement un plus grand nombre de pas. Précisons, en particulier, que si l'outil accomplit plusieurs fois la trajectoire circulaire donnée par l'équation horaire ci-dessus, les « tables des pas » $\Delta x$ et $\Delta y$ contiendront plusieurs répétitions de la séquence de 15 pas donnée à la figure 5.

La figure 3 donne la trajectoire 16 correspondant aux tables des pas de la figure 5. Chacun des deux axes déplacement de l'outil est commandé séparément par l'une des tables de pas. En conséquence, le déplacement résultant de l'outil 15 dans le plan « xy » s'effectue théoriquement par sauts successifs selon des segments rectilignes 20, et l'enchaînement de ces segments rectilignes devrait produire une trajectoire 16 polygonale. Si elle n'était pas corrigée, cette caractéristique pourrait constituer un inconvénient rédhibitoire. Toutefois, de façon assez remarquable, dans la réalité, l'inertie mécanique du système a tendance, tout à la fois, à arrondir la trajectoire et à uniformiser la vitesse du mouvement. Ce qui remédie à l'inconvénient susmentionné. Grâce à cette caractéristique avantageuse, on peut même, dans bon nombre de cas, obtenir un lissage suffisant en se contentant de N = 8 pas par tour, le fait de réduire le nombre de pas présente l'avantage d'autoriser une plus grande vitesse de rotation de la broche.

Si on a recours à un mode de programmation du système d'axes « y-x » qui ne comporte pas de contrôle rétroactif systématique de la position effective du système d'axes, il existe un risque de désynchronisation entre le mouvement du système d'axes « y-x » 2 et celui de la pièce 11. Pour éviter cet inconvénient, il est possible de prévoir, à intervalles réguliers, des arrêts pendant lesquels s'effectuent un tour de broche 5 sans mouvement du système d'axes 2. Ces arrêts permettent au système d'axes d'attendre un signal indiquant le début du tour suivant de façon à repartir de façon bien synchronisée.

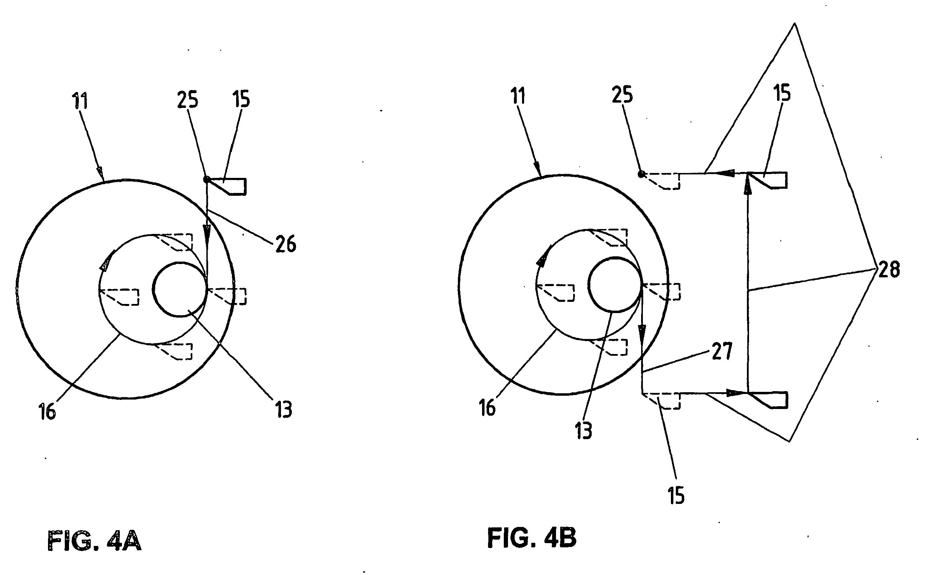

Le fait de programmer des arrêts impose une contrainte. Il s'agit du fait que, pour ne pas avoir de cassure dans la courbe, le point d'arrêt du couteau doit être hors matière. La figure 4 montre l'exemple d'une trajectoire complétée pour comporter un point d'arrêt (référencé 25) situé à distance de la pièce. A la figure 4A, en plus du mouvement circulaire 16, on a représenté un segment rectiligne 26 « d'entrée linéaire » correspondant à un déplacement du couteau 15 selon l'axe « y » depuis le point d'arrêt pour venir en contact avec la pièce en rotation.

La figure 4B montre un segment rectiligne 27 de « sortie linéaire » qui correspond également à un déplacement du couteau selon l'axe « y ». Après la sortie, le retour au point d'arrêt se fait par le chemin référencé 28. Le passage par le point d'arrêt 25 pourra être programmé à la fin de chaque trajectoire circulaire 16 de l'outil 15, ou moins fréquemment selon les caractéristiques du système de commande de la machine-outil utilisée.

Dans les « tables des pas » le segment « d'entrée linéaire » peut, par exemple, être programmé sous la forme d'un unique pas $\Delta y$ placé au début de la séquence donnée à la figure 5. De même, le segment de « sortie linéaire » peut également être programmé sous la forme d'un pas $\Delta y$ unique placé à la fin de la même séquence. Après la sortie linéaire, le retour au point d'arrêt (représenté sur la figure 4B par le chemin référencé 28) peut également être programmé sous la forme d'une suite de pas.

Le fait de prévoir un point d'arrêt hors matière peut présenter d'autres avantages en plus de celui de prévenir le risque, déjà mentionné, de désynchronisation entre le mouvement du système d'axes « y-x » et celui de la pièce en rotation. En effet, les logiciels de commande d'une machine-outil à commande numérique sont souvent prévus pour n'autoriser qu'un nombre de pas entier par tour de broche. Cette précaution est connue dans l'art antérieur pour éviter des problèmes lors de l'utilisation de la machine-outil pour des opérations de peignages. En raison d'erreurs d'arrondi, cette caractéristique du logiciel entraîne parfois la commande d'un tour de la pièce sans mouvements du système d'axes « y-x ». Or, si une telle immobilisation du système d'axes « y-x » se produit durant l'exécution du procédé de la présente invention, comme on l'a déjà dit, il est souhaitable que le point d'arrêt soit situé hors matière.

Comme l'homme du métier le sait bien, dans les opérations d'usinage à l'aide de machines-outils du type concerné par la présente invention, on opère soit par enlevage de copeaux dans la direction de l'axe « z », soit par enlevage de copeaux dans la direction de l'axe « x », ou encore, par une combinaison de ces deux directions. On comprendra que ces différentes possibilités existent aussi quand il s'agit d'opérations d'usinage selon le procédé de la présente invention.

Si l'enlevage de copeaux, et donc « l'avance », se fait dans la direction de l'axe « z », on comprendra que celle-ci n'influence pas le mouvement de l'outil dans le plan « xy ». Dans ces conditions, les « tables des pas » $\Delta x$ et $\Delta y$ n'ont pas à tenir compte explicitement de l'avance. Lorsqu'au contraire, on travaille avec une « avance » dans la direction de l'axe « x », le diamètre de la portée à usiner change progressivement. Or, comme on l'a vu, le rayon de la portée à usiner apparaît dans l'équation horaire du mouvement de l'outil. En effet :

$$X(j) = XO + \delta \cos(2\pi j/N)$$

avec XO = rayon.

Avec la pièce représentée sur la figure 2, on peut se convaincre que « XO », le rayon effectif de la pièce pour l'outil, passe de la valeur (d/2 + D/2) au début de l'opération d'usinage, à la valeur (d/2) à la fin de cette opération. Comme l'avance n'influence que le rayon de la pièce, et donc le paramètre « XO », il est relativement aisé de tenir compte de cette avance en programmant une réduction progressive de la valeur de « XO » sur un certain nombre de tours. La conséquence de cette réduction progressive de la valeur de « X0 » est que la trajectoire que doit parcourir l'outil dans le plan (xy) n'est pas une trajectoire circulaire fermée comme celle de l'équation horaire donnée plus haut. Au contraire dans le cas présent, la trajectoire de l'outil dans le plan (xy) est plus précisément une trajectoire constituée d'une succession de boucles ouvertes sensiblement circulaires et de rayon constant.

On peut définir des « tables des pas » pour produire cette trajectoire en boucles ouvertes en se basant sur les tables de la figure 5. Comme le rayon X0 n'entre que dans l'équation pour la direction « x », la table des pas $\Delta y$ n'a pas à en tenir compte et, comme dans l'exemple précédent, elle sera constituée essentiellement de plusieurs répétitions de la séquence de quinze pas donnée à la figure 5. Les séquences de pas $\Delta x$, en revanche, sont obtenues en ajoutant, à chaque pas $\Delta x$ de la figure 5, une quantité constante correspondant à la réduction du rayon X0 durant la durée d'un pas.

La pièce dont nous venons de décrire l'usinage comporte uniquement des portées cylindriques dont les axes sont parallèles. L'homme du métier comprendra que le procédé de la présente invention permet également de produire, par exemple, des pièces avec des portées coniques excentrées. En effet, pour usiner une portée conique, il suffit d'opérer comme pour une portée cylindrique tout en tenant compte de la variation du diamètre « d » au fur et à mesure de l'avance selon l'axe « z ». Ainsi, de façon semblable à ce qui est expliqué dans le paragraphe précédent, la trajectoire que doit parcourir l'outil dans le plan (xy) n'est pas, non plus, une trajectoire circulaire fermée, mais une trajectoire constituée d'une succession de boucles ouvertes sensiblement circulaires et de rayon constant. Les « tables des pas » $\Delta x$ et $\Delta y$ pour produire cette trajectoire en boucles ouvertes peuvent être obtenues de manière analogue à ce qui a été décrit pour l'exemple précédent.

De même, l'homme du métier comprendra que le procédé de la présente invention permet également de produire des portées dont les axes ne sont pas parallèles. En effet, pour usiner de telles portées obliques, il suffit d'opérer comme pour une portée cylindrique parallèle tout en tenant compte de la variation de *l'entraxe* « $\delta$ » au fur et à mesure de l'avance selon l'axe « z ». Dans ce dernier cas, la trajectoire que l'outil doit parcourir dans le plan (xy) n'est pas, non plus, un cercle mais une spirale dont le pas dépend de la variation de *l'entraxe* « $\delta$ » au fur et à mesure de l'avance selon l'axe « z ».

Comme on l'a vu plus haut avec l'équation horaire du mouvement, chaque pas $\Delta x$ et $\Delta y$ est proportionnel à l'entraxe « $\delta$ ». Ainsi, on obtient les « tables des pas » correspondant à la trajectoire en spirale ci-dessus, en multipliant la valeur de chaque pas par un coefficient proportionnel à la valeur de l'entraxe « $\delta$ » au moment de l'exécution de ce pas.

L'homme du métier comprendra que le procédé de la présente invention ne se limite pas à des portées dont la forme correspond à l'un des exemples donnés ci-dessus. L'homme du métier saura, en effet, déterminer l'équation horaire de l'outil pour obtenir d'autres formes de pièce à portées non-concentriques. En particulier, la présente invention ne ce limite pas à des portées de section circulaire. En effet, en modifiant légèrement l'équation horaire de l'outil pour obtenir, par exemple, une trajectoire elliptique, il est possible d'usiner notamment des portées excentrées dont la section est elliptique.

**Revendications**

1.  Procédé d'usinage de pièces non-concentriques à l'aide d'une machine-outil (1), ladite machine-outil

    . étant prévue pour travailler sur une pièce (11) constituée par une extrémité d'une barre maintenue en rotation constante autour d'un axe fixe (z), et

    . comportant de plus un système d'axes (2) permettant les déplacements d'un outil (3), ledit outil étant déplaçable par des mouvements de translation dans un plan (xy) perpendiculaire audit axe de rotation (z), et lesdits déplacements dans le plan (xy) étant asservis à des moyens de commande programmables;

    chaque pièce non concentrique consistant en au moins l'une des pièces que sont,

    . une pièce comportant au moins une première et une deuxième portée (12,13) cylindrique, la deuxième portée ayant son axe longitudinal décalé d'une distance δ par rapport à l'axe longitudinal de la première portée,

    . une pièce comportant une portée conique ou tronconique non-concentrique, le rayon X0 de ladite portée dépendant de la position selon l'axe « z », et l'axe longitudinal de ladite portée étant décalé d'une distance δ par rapport à l'axe longitudinal de la première portée,

    . une pièce comportant une portée dont l'axe principal est orienté obliquement par rapport audit axe de rotation (z), la distance δ entre l'axe longitudinal de ladite portée et l'axe de rotation (z) dépendant de la position selon l'axe « z »,

    le procédé comportant les étapes de :

    - déterminer l'équation horaire d'une trajectoire (16) à faire accomplir à l'outil (3) dans ledit plan (xy) perpendiculaire à l'axe de rotation (z), ladite trajectoire (16) formant sensiblement des boucles;

    - programmer lesdits moyens de commande pour faire accomplir à l'outil (3) ladite trajectoire (16) à la vitesse requise, ladite trajectoire comprenant au moins une boucle à parcourir complètement dans un temps égal à une rotation de ladite pièce (11);

    - faire exécuter par la machine-outil (1) le travail ainsi programmé dans lesdits moyens de commande,

    ce procédé étant **caractérisé en ce que** la trajectoire à faire accomplir à l'outil (3) dans le plan (xy) est programmée sous forme de deux suites d'ordres de déplacement (tables des pas), l'une de ces suites d'ordres (Δx) concernant les déplacements selon l'axe « x » et l'autre suite d'ordres (Δy) concernant les déplacements selon l'axe « y », les deux suites d'ordres étant prévues pour être exécutées en parallèle et la combinaison simultanée d'un ordre de chaque suite constituant un pas rectiligne dans le plan (xy), le rythme d'exécution des deux suites d'ordres de déplacement étant déterminé par le choix programmé de la durée (TE) d'un intervalle de temps.

2.  Procédé d'usinage de pièces non-concentriques selon la revendication précédente; **caractérisé en ce que** dans le cas d'une pièce comportant au moins une première et une deuxième portée (12,13) cylindrique, la deuxième portée ayant son axe longitudinal décalé d'une distance δ par rapport à l'axe longitudinal la première portée, l'équation horaire pour un mouvement pas-à-pas de l'outil est :

    $$X(j) = XO + \delta \cos(2\pi j/N)$$

    et

    $$Y(j) = \delta \sin(2\pi j/N)$$

    avec j = partie entière de t/TE
    où t:= le temps écoulé, et
    X0:= le rayon de ladite deuxième portée.

3.  Procédé d'usinage de pièces non-concentriques selon la revendication précédente; **caractérisé en ce que** les ordres (Δx) formant ladite suite d'ordres de déplacement selon l'axe « x » sont donnés par la relation :

    $$\Delta x_{j+1} = X(j+1) - X(j);$$

    et **en ce que** les ordres (Δy) formant ladite suite d'ordres de déplacement selon l'axe « y » sont donnés par la relation :

    $$\Delta y_{j+1} = Y(j+1) - Y(j).$$

4.  Procédé d'usinage de pièces non-concentriques selon la revendication précédente; **caractérisé en ce que** la valeur programmée du rayon X0 de la portée se réduit au fur et à mesure de l'avance de l'usinage.

**5.** Procédé d'usinage de pièces non-concentriques selon la revendication 1 ; **caractérisé en ce que** dans le cas d'une pièce comportant une portée conique ou tronconique non-concentrique, le rayon X0 de ladite portée dépendant de la position selon l'axe « z », et l'axe longitudinal de ladite portée étant décalé d'une distance δ par rapport à l'axe longitudinal la première portée,
l'équation horaire pour un mouvement pas-à-pas de l'outil est :

$$X(j) = XO + \delta \cos(2\pi j/N)$$

et

$$Y(j) = \delta \sin(2\pi j/N)$$

avec j = partie entière de t/TE
où t:= le temps écoulé, et
X0:= le rayon de ladite deuxième portée.

**6.** Procédé d'usinage de pièces non-concentriques selon la revendication 1 ; **caractérisé en ce que** dans le cas d'une pièce comportant une portée dont l'axe principal est orienté obliquement par rapport audit axe de rotation (z), la distance δ entre l'axe longitudinal de ladite portée et l'axe de rotation (z) dépendant de la position selon l'axe « z »,
l'équation horaire pour un mouvement pas-à-pas de l'outil est :

$$X(j) = XO + \delta \cos(2\pi j/N)$$

et

$$Y(j) = \delta \sin(2\pi j/N)$$

avec j = partie entière de t/TE
où t:= le temps écoulé, et
X0:= le rayon de ladite deuxième portée.

**7.** Procédé d'usinage de pièces non-concentriques selon la revendication 1; **caractérisé en ce que** ladite trajectoire à faire accomplir à l'outil comporte un point d'arrêt hors matière (25).

**8.** Procédé d'usinage de pièces non-concentriques selon la revendication précédente; **caractérisé en ce que** les suites d'ordres de déplacement comportent au moins un pas d'entrée linéaire (26), un pas de sortie linéaire (27) et des pas (28) de retours au point d'arrêt (25).

**9.** Procédé d'usinage de pièces non-concentriques selon la revendication 1; **caractérisé en ce que** les pas s'enchaînent pour produire une vitesse constante en valeur absolue.

**10.** Procédé d'usinage de pièces non-concentriques selon la revendication 1; **caractérisé en ce que** ladite trajectoire comporte des boucles programmées pour être parcourues en quinze intervalles de temps (TE) au plus.

**11.** Procédé d'usinage de pièces non-concentriques selon la revendication 1; **caractérisé en ce que** ladite trajectoire comporte des boucles programmées pour être parcourues en huit intervalles de temps (TE) au plus.

**12.** Machine-outil **caractérisée en ce qu'**elle est programmée pour mettre en oeuvre le procédé selon l'une des revendication précédente.

**Claims**

**1.** Method of machining non-concentric pieces using a machine tool (1), said machine tool

• being provided to work on a piece (11) consisting of an end of a bar maintained in constant rotation about a fixed axis (z), and
• further comprising a system (2) of axes allowing the displacements of a tool (3), said tool being displaceable through translatory movements in a plane (xy) perpendicular to said axis of rotation (z), and said displacements in the plane (xy) being controlled by programmable control means;
each non-concentric piece consisting of at least one of the pieces which are
• a piece comprising at least one first and one second cylindrical bearing surface (12, 13), the second bearing surface having its longitudinal axis offset by a distance δ with respect to the longitudinal axis of the first bearing surface,
• a piece comprising a conical or frustoconical non-concentric bearing surface, the radius X0 of said bearing surface depending upon the position along the z axis, and the longitudinal axis of said bearing surface being offset by a distance δ with respect to the longitudinal axis of the first bearing surface,
• a piece comprising a bearing surface whose main axis is oriented obliquely with respect to said axis of rotation (z), the distance δ between the longitudinal axis of said bearing surface and the axis of rotation (z) depending upon the position along the z axis,

the method comprising the steps of:

- determining the motion equation of a trajectory (16) to be followed by the tool (3) in said plane (xy) perpendicular to the axis of rotation (z), said trajectory (16) appreciably forming loops;
- programming said control means to make the tool (3) follow said trajectory (16) at the required speed, said trajectory comprising at least one loop to be travelled through completely in a time equal to one rotation of said piece (11);
- having the machine tool (1) perform the work thus programmed in said control means,

this method being **characterised in that** the trajectory to be made by the tool (3) in the plane (xy) is programmed in the form of two sequences of displacement commands (tables of steps), one of these sequences of commands (Δx) relating to the displacements along the x axis and the other sequence of commands (Δy) relating to the displacements along the y axis, the two sequences of commands being intended to be executed in parallel and the simultaneous combination of a command of each sequence constituting a rectilinear step in the plane (xy), the timing of execution of the two sequences of displacement commands being determined by the programmed selection of the duration (TE) of a time interval.

2. Method of machining non-concentric pieces according to the preceding claim, **characterised in that** in the case of a piece comprising at least a first and a second cylindrical bearing surface (12, 13), the second bearing surface having its longitudinal axis offset by a distance δ with respect to the longitudinal axis of the first bearing surface, the motion equation for a step-by-step movement of the tool (3) is:

$$X(j) = XO + \delta \cos(2\pi j/N)$$

and

$$Y(j) = \delta \sin(2\pi j/N)$$

with j being the integer part of t/TE

where t is the time lapsed, and
X0 is the radius of said second bearing surface.

3. Method of machining non-concentric pieces according to the preceding claim, **characterised in that** the commands (Δx) forming said sequence of displacement commands along the x axis are given by the formula:

$$\Delta x_{j+1} = X(j+1) - X(j);$$

and **in that** the commands (Δy) forming said sequence of displacement commands along the y axis are given by the relationship:

$$\Delta y_{j+1} = Y(j+1) - Y(j).$$

4. Method of machining non-concentric pieces according to the preceding claim, **characterised in that** the programmed value for the radius X0 of the bearing surface decreases with the advance of the machining.

5. Method of machining non-concentric pieces according to claim 1, **characterised in that** in the case of a piece comprising a conical or frustoconical non-concentric bearing surface, the radius X0 of said bearing surface depending upon the position along the z axis, and the longitudinal axis of said bearing surface being offset by a distance δ with respect to the longitudinal axis of the first bearing surface, the motion equation for a step-by-step movement of the tool is:

$$X(j) = XO + \delta \cos(2\pi j/N)$$

and

$$Y(j) = \delta \sin(2\pi j/N)$$

with j being the integer part of t/TE
where t is the time lapsed, and
X0 is the radius of said second bearing surface.

6. Method of machining non-concentric pieces according to claim 1, **characterised in that** in the case of a piece comprising a bearing surface whose main axis is oriented obliquely with respect to said axis of rotation (z), the distance δ between the longitudinal axis of said bearing surface and the axis of rotation (z) depending upon the position along the z axis, the motion equation for a step-by-step movement of the tool is:

$$X(j) = XO + \delta \cos(2\pi j/N)$$

and

$$Y(j) = \delta \sin(2\pi j/N)$$

with j being the integer part of t/TE
where t is the time lapsed, and
X0 is the radius of said second bearing surface.

7. The method of machining non-concentric pieces according to claim 1 or 2, **characterised in that** said trajectory which the tool (3) is to follow includes a stop point outside the material (25).

8. The method of machining non-concentric pieces according to the preceding claim, **characterised in that** the sequences of displacement commands comprise at least one step of linear entry (26), one step of linear exit (27) and return steps to the stop point (25).

9. The method of machining non-concentric pieces according to claim 2, **characterised in that** the steps are linked together to produce a constant absolute speed.

10. The method of machining non-concentric pieces according to claim 2, **characterised in that** said trajectory comprises programmed loops to be travelled through in fifteen time intervals (TE) at most.

11. The method of machining non-concentric pieces according to claim 2, **characterised in that** said trajectory comprises programmed loops to be travelled through in eight time intervals (TE) at most.

12. A machine tool **characterised in that** it is programmed to implement the method according to one of the preceding claims.

**Patentansprüche**

1. Verfahren zur Bearbeitung von nicht konzentrischen Teilen mit Hilfe einer Werkzeugsmaschine (1), wobei die Werkzeugsmaschine

- dazu bestimmt ist, an einem Teil (11) zu arbeiten, der durch ein Ende einer um einen feste Drehachse (z) drehend gehaltenen Stange gebildet ist und
- zudem ein Achsensystem (2) umfasst, das die Bewegungen eines Werkzeugs (3) erlaubt, wobei das besagte Wergzeug durch Translationsbewegungen in einer zu der besagten Drehachse(z) senkrecht liegenden Ebene (xy) verfahrbar ist und die Bewegungen in der Ebene (xy) durch programmierbare Steuermittel gesteuert sind;
- wobei jedes nicht konzentrische Teil aus mindestens einem der Teile besteht, die durch ein Teil gebildet sind,
- das mindestens eine erste und eine zweite zylindrische Ausladung (12, 13) umfasst, wobei die Längsachse der zweiten Ausladung um einen ö Abstand zu der Längsachse der ersten Ausladung versetzt angeordnet ist,
- das mindestens eine konische oder kegelstumpfförmige nicht-konzentrische Ausladung umfasst, wobei das Radius X0 der Ausladung von der Stellung nach der Achse "z" abhängt und die Längsachse der zweiten Ausladung um einen δ Abstand zu der Längsachse der ersten Ausladung versetzt angeordnet ist,
- das eine Ausladung umfasst, deren Längsachse schräg zu der besagten Drehachse (z) ausgerichtet ist, wobei der Abstand ö zwischen der Längsachse der gesagten Ausladung und der Drehachse (z) von der Stellung nach Achse "z" abhängt,

wobei das Verfahren folgende Schritte umfasst:

- Ermittlung der zeitlichen Gleichung einer vom Werkzeug (3) zurückzulegenden Bahn (16) in der zu der Drehachse (z) senkrecht liegenden besagten Ebene (xy), wobei die Bahn (16) wesentlich Schleifen bildet;
- Programmierung der besagten Steuerungsmittel, damit das Werkzeug (3) die besagte Bahn (16) mit geeigneter Geschwindigkeit zurücklegen kann, wobei die Bahn mindestens eine Schleife umfasst, die vollständig in einer einer Drehung des besagten Teils (11) gleichen Zeitspanne befahren werden muss;
- Durchführung der somit in den Steuermitteln programmierten Arbeit durch die Werkzeugsmaschine (1),

wobei dieses Verfahren **dadurch gekennzeichnet ist, dass** die vom Werkzeug (3) zurückzulegende Bahn in der Ebene (xy) in Form zweier Bewegungsbefehlsreihenfolgen (Schritttabelle) programmiert ist, wobei eine dieser Bewegungsbefehlsreihenfolgen (Δx) die Bewegungen nach der Achse "x" und die weiteren Befehlsreihenfolgen (Δy) nach der Achse "y" betrifft,

wobei beide Befehlsreihenfolgen zu deren Parallelldurchführung vorgesehen sind, und die gleichzeitige Kombinierung eines Befehls aus jeder Reihenfolge einen geradelinigen Schritt in der Ebene (xy) bildet, wobei der Ausführungsrhythmus beider Bewegungsbefehlsreihenfolgen durch die programmierte Auswahl der Dauer (TE) einer Zeitspanne bestimmt ist.

2. Verfahren zur Bearbeitung von nicht konzentrischen Teilen nach vorhergehendem Anspruch, **dadurch gekennzeichnet dass** bei einem Teil, das mindestens eine erste und eine zweite zylindrische Ausladung (12, 13) umfaßt, wobei die Längsachse der zweiten Ausladung um einen δ Abstand zu der Längsachse der ersten Ausladung versetzt angeordnet ist,
die zeitliche Gleichung für eine Schrittbewegung des Werkzeuges ist :

$$X(j) = XO + \delta\cos(2\pi j/N)$$

und

$$Y(j) = \delta\sin(2\pi j/N)$$

mit j = Vollanteil von t/TE
wo t:= der abgelaufenen Zeit und
XO: = dem Radius der zweiten Ausladung.

3. Verfahren zur Bearbeitung von nicht konzentrischen Teilen nach vorhergehendem Anspruch, **dadurch gekennzeichnet dass**, die Befehle (Δx), die die Bewegungsbefehlsreihenfolge nach der Achse "x" bilden, durch das Verhältnis gegeben sind:

$$\Delta X_{j+1} = X(j+1) - X(j);$$

Und dass die Befehle (Δy), die die Bewegungsbefehlsreihenfolge nach der Achse "y" bilden, durch das Verhältnis gegeben sind:

$$\Delta yX_{j+1} = y(j+1) - y(j);$$

4. Verfahren zur Bearbeitung von nicht konzentrischen Teilen nach vorhergehendem Anspruch, **dadurch gekennzeichnet, dass** der programmierte Wert eines XO Radius der Ausladung in dem Maße kleiner wird, wie die Verarbeitung vorangeht.

5. Verfahren zur Bearbeitung von nicht konzentrischen Teilen nach Anspruch 1, **dadurch gekennzeichnet, dass** bei einem Teil mit einer konischen oder kegelstumpfförmigen nicht-konzentrischen Ausladung, wobei der XO Radius dieser Ausladung von der Stellung der Achse "z" abhängt und wobei die Längsachse der Ausladung um einen δ Abstand zu der Längsachse der ersten Ausladung versetzt angeordnet ist,
die zeitliche Gleichung für eine Schrittbewegung des Werkzeuges ist :

$$X(j) = XO + \delta\cos(2\pi j/N)$$

$$Y(j) = \delta\sin(2\pi j/N)$$

mit j = Vollanteil von t/TE
wo t:= der abgelaufenen Zeit und
XO: = dem Radius der zweiten Ausladung.

6. Verfahren zur Bearbeitung von nicht konzentrischen Teilen nach Anspruch 1, **dadurch gekennzeichnet, dass** bei einem Teil, die eine Ausladung umfasst, deren Längsachse schräg zu der besagten Drehachse (z) ausgerichtet ist, wobei der Abstand δ zwischen der Längsachse der besagten Ausladung und der Drehachse (z) von der Stellung nach Achse "z" abhängt, die zeitliche Gleichung für eine Schrittbewegung des Werkzeuges ist :

$$X(j) = XO + \delta\cos(2\pi j/N)$$

$$Y(j) = \delta\sin(2\pi j/N)$$

mit j = Vollanteil von t/TE
wo t:= der abgelaufenen Zeit und
XO: = dem Radius der zweiten Ausladung.

7. Verfahren zur Bearbeitung von nicht konzentrischen Teilen nach Anspruch 1, **dadurch gekennzeichnet dass** die vom Werkzeug zurückzulegende besagte Bahn einen Anhaltspunkt außer Materie (25) umfasst.

8. Verfahren zur Bearbeitung von nicht konzentrischen Teilen nach vorhergehendem Anspruch, **dadurch gekennzeichnet dass** die Bewegungsbefehlsreihenfolgen mindestens einen linearen Eingangspunkt (26), einen linearen Ausgangsschritt (27) und Wendepunkte (28) zum Anhaltspunkt (25) umfassen.

9. Verfahren zur Bearbeitung von nicht konzentrischen Teilen nach vorhergehendem Anspruch, **dadurch gekennzeichnet, dass** die Schritte ineinander folgen, um eine konstante Geschwindigkeit als Absoluter Wert zu erzeugen.

10. Verfahren zur Bearbeitung von nicht konzentrischen Teilen nach vorhergehendem Anspruch, **dadurch gekennzeichnet, dass** die besagte Bahn programmierte Schleifen umfasst, um höchstens in fünfzehn Zeitabständen (TE) durchgefahren zu werden.

11. Verfahren zur Bearbeitung von nicht konzentrischen Teilen nach vorhergehendem Anspruch, **dadurch gekennzeichnet, dass** die besagte Bahn programmierte Schleifen umfasst, um höchstens in acht Zeitabständen (TE) durchgefahren zu werden.

12. Werkzeugsmaschine **dadurch gekennzeichnet, dass** sie zu der Durchführung des Verfahrens nach einem der vorhergehenden Ansprüche programmiert ist.

FIG. 1

**FIG. 2**

**FIG. 3**

FIG. 4B

FIG. 4A

| $\triangle x$ | $\triangle y$ |
|---------|---------|
| -0.086 | 0.405 |
| -0.244 | 0.337 |
| -0.360 | 0.208 |
| -0.414 | 0.044 |
| -0.396 | -0.128 |
| -0.309 | -0.278 |
| -0.169 | -0.380 |
| 0.000 | -0.416 |
| 0.169 | -0.380 |
| 0.309 | -0.278 |
| 0.396 | -0.128 |
| 0.414 | 0.044 |
| 0.360 | 0.208 |
| 0.244 | 0.337 |
| 0.086 | 0.405 |

## FIG. 5